(19) Europäisches Patentamt
European Patent Office
Office européen des brevets

(11) EP 1 306 203 A1

(12) EUROPEAN PATENT APPLICATION

(43) Date of publication:
**02.05.2003 Bulletin 2003/18**

(21) Application number: **02290163.1**

(22) Date of filing: **23.01.2002**

(51) Int Cl.[7]: **B32B 1/08**, B32B 15/08, B32B 27/32, B32B 27/34, B32B 27/36, B32B 15/20, F16L 11/14

(84) Designated Contracting States:
**AT BE CH CY DE DK ES FI FR GB GR IE IT LI LU MC NL PT SE TR**
Designated Extension States:
**AL LT LV MK RO SI**

(30) Priority: **26.10.2001 EP 01402791**

(71) Applicants:
- **Atofina**
**92800 Puteaux (FR)**
- **Uponor Innovation AB**
**513 81 Fristad (SE)**

(72) Inventors:
- **Merziger, Joachim**
**27000 Evreux (FR)**
- **Seidel, Ulrich**
**97437 Hassfurt (DE)**

(74) Representative: **Neel, Henry et al**
**Atofina,**
**DPI,**
**Cours Michelet,**
**La Défense 10**
**92091 Paris La Défense Cedex (FR)**

# (54) Polyamide or polyester- and aluminium-based multilayer tube

(57) The present invention relates to a multilayer tube comprising, in its radial direction from the outside inwards:

- an outer layer formed from a polyamide or a polyolefin or a polyester,
- a layer formed from a binder,
- a layer of aluminium,
- a layer formed from a binder,
- an inner layer in contact with the petrol, chosen from:
  - blends of polyamide and polyolefin with a polyamide matrix,
  - polyamides comprising at least one product chosen from plasticizers, copolymers having polyamide blocks and polyether blocks and EPR-type modifiers,
  - polyesters,

the layers being successive and adhering to one another in their respective contact region.

EP 1 306 203 A1

## Description

[Field of the invention]

The present invention relates to tubes, based on polyamides or polyesters and aluminium for fluid transfer. As examples of tubes for fluid transfer may be mentionned tubes for transporting petrol, and in particular for conveying the petrol from the tank to the engine of a motor vehicle. As other examples of fluid transfer may be mentionned the fluids involved in the fuel cell, the CO2 system for cooling and air conditionning, the hydraulic lines, the cooling circuit, the air conditionning and the medium pressure power transfer.

As regards the tubes for petrol for safety and environmental protection reasons, motor-vehicle manufacturers require these tubes to have both mechanical properties such as burst strength and flexibility with good cold (-40°C) impact strength as well as good high-temperature (125°C) strength, and also very low permeability to hydrocarbons and to their additives, particularly alcohols such as methanol and ethanol. These tubes must also have good resistance to the fuels and lubrication oils for the engine.

[Prior art and technical problem]

Among the characteristics of the specification for the petrol transportation tubes, five are particularly difficult to obtain jointly in a simple manner:

- cold (-40°C) impact strength - the tube does not break;
- fuel resistance;
- high-temperature (125°C) strength;
- very low permeability to petrol;
- good dimensional stability of the tube in use with the petrol.

In multilayer tubes of various structures, the cold impact strength remains unpredictable before having carried out the standardized tests for cold impact strength.

German Utility Model No DE 0009218141U1 published on 6 june 1992 and filed in the name of Rasmussen GmbH and Unicor GmbH describes aluminium tubes covered on their inner face and on their outer face with a polyamide. An adhesive layer may be placed between the aluminium and the polyamide. These tubes meet the abovementioned characteristics, however they age poorly. This is because delamination of the polyamide inner layer (i.e. the layer in contact with the petrol) is observed, which impairs the mechanical integrity and above all may give rise to blockages in the tube when it is under reduced pressure. It has now been found that if the inner layer consists either of a blend of a polyamide and a polyolefin with a polyamide matrix or of a polyamide comprising at least one product chosen from plasticizers, copolymers having polyamide blocks and polyether blocks and ethylene copolymers such as, for example, the impact modifiers of the EPR (an abbreviation for Ethylene Propylene Rubber, an ethylene-propylene copolymer) type then there is no longer any delamination. The Applicant has also found that it is possible to use an aluminium layer thin enough for the tube to be flexible and thus make it easier to install it.

[Brief description of the invention]

The present invention relates to a multilayer tube comprising, in its radial direction from the outside inwards:

- an outer layer formed from a polyamide or a polyolefin or a polyester,
- a layer formed from a binder,
- a layer of aluminium,
- a layer formed from a binder,
- an inner layer in contact with the petrol, chosen from:
    - ➢ blends of polyamide and polyolefin with a polyamide matrix,
    - ➢ polyamides comprising at least one product chosen from plasticizers, copolymers having polyamide blocks and polyether blocks and EPR-type modifiers,
    - ➢ polyesters.

the layers being successive and adhering to one another in their respective contact region,

According to another embodiment of the invention, the aluminium layer is thin enough for the tube to be flexible.

Advantageously, the inner layer or the outer layer (or both) contains an electrically conductive element producing a surface resistivity of advantageously less than $10^6$ Ω/□.

Advantageously, the tube according to the invention has an outside diameter ranging from 6 to 110 mm and a total wall thickness of 0.36 mm to 5 mm, namely:

a thickness of 50 to 2000 μm for the outer layer,
a thickness of 10 to 150 μm for the binder layers,
a thickness of 10 to 1500 μm for the aluminium layer,
a thickness of 100 to 1200 μm for the inner layer possibly filled with an electrically conductive element.

The tube of the present invention has a very low permeability to petrol, particularly to hydrocarbons and their additives, and in particular to alcohols, such as methanol and ethanol, or to ethers, such as MTBE or ETBE. These tubes also have good resistance to engine lubrication oils and fuels.

This tube has very good mechanical properties at low or high temperature.

[Detailed description of the invention]

**With regard to the polyamide outer layer**, polyamide is understood to mean a product resulting from the condensation:

- of one or more amino acids, such as aminocaproic, 7-aminoheptanoic, 11-aminoundecanoic and 12-aminododecanoic acids, or of one or more lactams, such as caprolactam, oenantholactam and lauryllactam;
- of one or more salts or mixtures of diamines, such as hexamethylenediamine, dodecamethylenediamine, metaxylylenediamine, bis-p-(aminocyclohexyl)methane and trimethylhexamethylenediamine, with diacids, such as isophthalic, terephthalic, adipic, azelaic, suberic, sebacic and dodecanedicarboxylic acids;

or mixtures of several of these monomers, which results in copolyamides.

Aliphatic diamines are $\alpha,\omega$-diamines containing, between the amino terminal groups, at least 6 carbon atoms, preferably 6 to 10 carbon atoms. The carbon chain may be linear (polymethylenediamine) or branched or even cycloaliphatic. Preferred diamines are hexamethylenediamine (HMDA), dodecamethylenediamine and decamethylenediamine.

The dicarboxylic acids may be aliphatic, cycloaliphatic or aromatic. The aliphatic dicarboxylic acids are $\alpha,\omega$-dicarboxylic acids having at least 4, preferably at least 6, carbon atoms (excluding the carbon atoms of the carboxylic groups) in the linear or branched carbon chain. The diacids are azelaic, sebacic and 1,12-dodecanoic acids. As an illustration of such PAs, mention may be made of:

polyhexamethylene sebacamide (PA-6,10),
polyhexamethylene dodecanediamide (PA-6,12),
poly(undecanoamide) (PA-11),
poly(lauryllactam) (2-azacyclotridecanone) (PA-12),
polydodecamethylene dodecanediamide (PA-12,12),
polycapronamide (PA-6),
polyhexamethylene adipamide (PA-6,6).

The PAs have a number-average molecular mass $\overline{M}_n$ generally greater than or equal to 5000. Their inherent viscosity (measured at 20°C) for a 0.5 g sample in 100 g of *meta*-cresol) is in general greater than 0.7.

It is possible to use polyamide blends. Advantageously, PA-6 and PA-6,6 and PA-12 are used.

The PAs have a number-average molecular mass $\overline{M}_n$ generally greater than or equal to 5000. Their inherent viscosity (measured at 20°C) for a 0.5 g sample in 100 g of *meta*-cresol) is in general greater than 0.7.

Advantageously, PA-12 (nylon-12) or PA-11 (nylon-11) is used.

**With regard to the polyolefin outer layer**, the polyolefines are described in a further paragraph relating to the inner's layer blend of a polyamide and a polyolefin.

**With regard to the polyester outer layer**, the term "polyester" denotes polymers which are saturated products coming from the condensation of glycols and of dicarboxylic acids, or of their derivatives. Preferably, they comprise the products of the condensation of aromatic dicarboxylic acids having from 8 to 14 carbon atoms and of at least one glycol chosen from the group consisting of neopentyl glycol, cyclohexanedimethanol and aliphatic glycols of formula $HO(CH_2)_nOH$ in which n is an integer ranging from 2 to 10. Up to 50 mol% of the aromatic dicarboxylic acid may be replaced with at least one other aromatic dicarboxylic acid having from 8 to 14 carbon atoms, and/or up to 20 mol% may be replaced with an aliphatic dicarboxylic acid having from 2 to 12 carbon atoms.

The preferred polyesters are polyethylene terephthalate (PET), poly(1,4-butylene) terephthalate (PBT), 1,4-cyclohexylene dimethylene terephthalate/ isophthalate) and other esters derived from aromatic dicarboxylic acids such as isophthalic acid, dibenzoic acid, naphthalene dicarboxylic acid, 4,4'-diphenylenedicarboxylic acid, bis(p-carboxyphenyl)methane acid, ethylene bis(p-benzoic) acid, 1,4-tetramethylene bis(p-oxybenzoic) acid, ethylene bis(para-oxybenzoic) acid, 1,3-trimethylene bis(p-oxybenzoic) acid, and glycols such as ethylene glycol, 1,3-trimethylene glycol, 1,4-tetramethylene glycol, 1,6-hexamethylene glycol, 1,3-propylene glycol, 1,8-octamethylene glycol and 1,10-decamethylene glycol. The MFI of these polyesters, measured at 250°C and with 2.16 kg, may vary from 2 to 100 and advantageously from 10 to 80. "MFI" denotes the melt flow index.

It would not be outside the scope of the invention if the polyesters consisted of several diacids and/or several diols. It is also possible to use a blend of various polyesters.

It would not be outside the scope of the invention if the polyesters contained copolyetheresters. These copolyetheresters are copolymers containing polyester blocks and polyether blocks having polyether units derived from polyetherdiols such as polyethylene glycol (PEG), polypropylene glycol (PPG) or polytetramethylene glycol (PTMG), dicarboxylic acid units such as terephthalic acid units, and short, chain-extender, diol units such as glycol (ethanediol) or 1,4-butanediol. The linking of the polyethers with the diacids forms the flexible segments whereas the linking of the glycol or butanediol with the diacids forms the rigid segments of the copolyetherester. These copolyetheresters are thermoplastic elastomers. The proportion of these copolyetheresters may represent up to 30 parts per 100 parts of the polyester.

**As regards the electrically conductive element**, this is any conductor of electricity. Examples which may be mentioned are metals, metal oxides and carbon-based products. Examples of carbon-based products which may be mentioned are graphite, carbon black aggregates, carbon fibres, active charcoals and carbon nanotubes. It would not constitute a departure from the context of the invention to use several electrically conductive elements.

The outer layer may contain carbon black advantageously in an amount sufficient for the surface resistivity to be less than $10^6$ Ω/□. This amount of carbon black is usually between 5 and 30 parts by weight of black per 100 parts of the polyamide or the polyethylene or the polyester.

**The binder layer** allows good adhesion between the aluminium layer and each adjacent layer and the term "binder" means any product which allows this adhesion. The binder is advantageously chosen from copolyamides and functionalized polyolefins.

**As examples of functionalized polyolefins**, mention may be made of:

- polyethylene, polypropylene, copolymers of ethylene with at least one alpha-olefin, blends of these polymers, all these polymers being grafted with unsaturated carboxylic acid anhydrides such as, for example, maleic anhydride. It is also possible to use blends of these grafted polymers with these ungrafted polymers;
- copolymers of ethylene with at least one product chosen from (i) unsaturated carboxylic acids, their salts and their esters, (ii) vinyl esters of saturated carboxylic acids, (iii) unsaturated dicarboxylic acids, their salts, their esters, their half-esters and their anhydrides and (iv) unsaturated epoxides, these copolymers possibly being grafted with unsaturated dicarboxylic acid anhydrides such as maleic anhydride or unsaturated epoxides such as glycidyl methacrylate.

Mention may also be made of binders of the copolyamide type. The copolyamides that can be used in the present invention have a melting point (DIN 53736B standard) of between 60 and 200°C and their relative solution viscosity can be between 1.3 and 2.2 (DIN 53727 standard; m-cresol solvent, 0.5 g/100 ml concentration, 25°C temperature, Ubbelohde viscometer). Their melt rheology is preferably similar to that of the materials of the outer and inner layers.

**The copolyamides** derive, for example, from the condensation of alpha,omega-aminocarboxylic acids, of lactams or of dicarboxylic acids and diamines.

**According to a first type**, the copolyamides result from the condensation of at least two alpha,omega-aminocarboxylic acids or of at least two lactams having from 6 to 12 carbon atoms or of a lactam and of an aminocarboxylic acid not having the same number of carbon atoms, in the possible presence of a chain stopper which may, for example, be a monoamine or a diamine or a monocarboxylic acid or a dicarboxylic acid. Among chain stoppers, mention may be made in particular of adipic acid, azelaic acid, stearic acid and dodecanediamine. The copolyamides of this first type may also include units which are residues of diamines and dicarboxylic acids.

By way of examples of dicarboxylic acids, mention may be made of adipic acid, nonanedioic acid, sebacic acid and dodecanedioic acid.

By way of examples of alpha,omega-aminocarboxylic acids, mention may be made of aminocaproic acid, aminoundecanoic acid and aminododecanoic acid.

By way of examples of lactams, mention may be made of caprolactam and lauryllactam (2-azacyclotridecanone).

**According to a second type**, the copolyamides result from the condensation of at least one alpha, omega-aminocarboxylic acid (or a lactam), at least one diamine and at least one dicarboxylic acid. The alpha, omega-aminocarboxylic acid, the lactam and the dicarboxylic acid may be chosen from those mentioned above.

The diamine may be a branched, linear or cyclic aliphatic diamine or else an aryl-type diamine.

By way of examples, mention may be made of hexamethylenediamine, piperazine, isophoronediamine (IPD), methylpentamethylenediamine (MPDM), bis(aminocyclohexyl)methane (BACM) and bis(3-methyl-4-aminocyclohexyl)methane (BMACM).

By way of examples of copolyamides, mention may be made of the following:

a) **6/12/IPD.6**
in which:

6 denotes units resulting from the condensation of caprolactam,
12 denotes units resulting from the condensation of lauryllactam (2-azacyclotridecanone),
IPD.6 denotes units resulting from the condensation of isophoronediamine and adipic acid.
The proportions by weight are 20/65/15, respectively.
The melting point is between 125°C and 135°C.

b) **6/6,6/12**
in which:

6 denotes units resulting from the condensation of caprolactam,
6,6 denotes hexamethyleneadipamide (hexamethylenediamine condensed with adipic acid) units.

12 denotes units resulting from the condensation of lauryllactam (2-azacyclotridecanone).
The proportions by weight are respectively 40/20/40.
The melting point is between 115°C and 127°C.

c) **pip.12/pip.9/11**
in which:

pip.12 denotes units resulting from the condensation of piperazine and a $C_{12}$ diacid;
pip.9 denotes units resulting from the condensation of piperazine and a $C_9$ diacid;
11 denotes units resulting from the condensation of aminoundecanoic acid,
the proportions be weight are 35 / 35 / 30, respectively.

The processes for manufacturing copolyamides are known from the prior art and these copolyamides may be manufactured by polycondensation, for example in an autoclave.

**With regard to the aluminium layer**, this may be formed by bending and joining. For example this processing could be done by ultrasonic welding according to patent EP 0581208B1. The thickness of the Al-layer is between 0.01mm and 1.5mm. Preferantially the thickness is in the range between 20µm and 0.5mm and most preferantially the thickness is between 50µm and 100µm. For the aluminium different aluminium grades and its alloys can be used.

**With regard to the inner layer, in contact with the petrol, and firstly blends of a polyamide and a polyolefin with a polyamide matrix.** With regard to the polyamides of the polyamide/polyolefin blend, it is possible to use the polyamides mentioned above for the outer layer. Advantageously, PA-6, PA-6/6,6 and PA-6,6 are used. With regard to the polyolefins of the polyamide/polyolefin blend of the inner or intermediate layer, polyolefins are understood to mean polymers comprising olefin units such as, for example, the units: ethylene, propylene, 1-butene and their higher homologues.

By way of example, mention may be made of:

- polyethylene, polypropylene, copolymers of ethylene with alpha-olefins. These products may be grafted with unsaturated carboxylic acid anhydrides such as maleic anhydride or unsaturated epoxides such as glycidyl methacrylate;
- copolymers of ethylene with at least one product chosen from (i) unsaturated carboxylic acids, their salts and their esters, (ii) vinyl esters of saturated carboxylic acids, (iii) unsaturated dicarboxylic acids, their salts, their esters, their half-esters and their anhydrides and (iv) unsaturated expoxides.

These ethylene copolymers may be grafted with unsaturated dicarboxylic acid anhydrides or unsaturated epoxides;

- styrene/ethylene-butylene/styrene block copolymers (SEBS), these possibly being maleicized.

It is possible to use blends of two or more of these polyolefins.

Advantageously, the following are used:

- polyethylene;
- copolymers of ethylene with an alpha-olefin;
- ethylene/alkyl (meth)acrylate copolymers;
- ethylene/alkyl (meth)acrylate/maleic anhydride copolymers, the maleic anhydride being grafted or copolymerized;
- ethylene/alkyl (meth) acrylate/glycidyl methacrylate copolymers, the glycidyl methacrylate being grafted or copolymerized;
- polypropylene.

It is recommended, in order to facilitate the formation of the polyamide matrix, and if the polyolefins have few or no functional groups able to facilitate the compatibilization, to add a compatibilizer.
The compatibilizer is a product known per se for compatibilizing polyamides and polyolefins.

Mention may be made, for example, of:

- polyethylene, polypropylene, ethylene-propylene copolymers, ethylene-butylene copolymers, all these products being grafted with maleic anhydride or with glycidyl methacrylate;
- ethylene/alkyl (meth)acrylate/maleic anhydride copolymers, the maleic anhydride being grafted or copolymerized;
- ethylene/vinyl acetate/maleic anhydride copolymers, the maleic anhydride being grafted or copolymerized;
- the above two copolymers in which the maleic anhydride is replaced with glycidyl methacrylate;
- ethylene/(meth)acrylic acid copolymers, and possibly their salts;
- polyethylene, polypropylene or ethylene/propylene copolymers, these polymers being grafted with a product having a reactive site with amines; these grafted copolymers then being condensed with polyamides or polyamide oligomers having a single amine end group.

These products are described in Patents FR 2291225 and EP 342066, the contents of which are incorporated in the present application.

The amount of polyamide forming the matrix in the inner layer may be between 55 and 95 parts per 5 to 45 parts of polyolefins.

The amount of compatibilizer is the amount sufficient for the polyolefin to be dispersed in the form of nodules in the polyamide matrix. It may represent up

to 20% of the weight of the polyolefin. These polymers of the inner layer are manufactured by blending the polyamide, the polyolefin and possibly the compatibilizer using standard techniques for melt blending (twin-screw, Buss, single-screw extruders).

These polyamide/polyolefin blends of the inner layer may be plasticized and possibly contain fillers such as carbon black, etc.

Such polyamide/polyolefin blends are described in Patent US 5342886.

The preferred embodiments of the blend of polyamides and polyolefins with a polyamide matrix will now be described. This blend when containing conducting black may be used in the inner layer and without conducting black in the intermediate layer.

**According to a first preferred embodiment of the invention**, the polyolefin comprises (i) a high-density polyethylene (HDPE) and (ii) a blend of a polyethylene (C1) and a polymer (C2) chosen from elastomers, very low-density polyethylenes and ethylene copolymers, the (C1) + (C2) blend being cografted with an unsaturated carboxylic acid.

**According to a second preferred embodiment of the invention**, the polyolefin comprises (i) polypropylene and (ii) a polyolefin which results from the reaction of a polyamide (C4) with a copolymer (C3) comprising propylene and an unsaturated monomer X, which is grafted or copolymerized.

**According to a third preferred embodiment of the invention,** the polyolefin comprises (i) a polyethylene of the LLDPE, VLDPE or metallocene type and (ii) an ethylene/alkyl (meth)acrylate/maleic anhydride copolymer.

With regard to the first embodiment, the proportions (by weight) are advantageously the following:

60 to 70% of polyamide,
5 to 15% of the cografted blend of (C1) and (C2), the balance being high-density polyethylene.

With regard to the high-density polyethylene, its density is advantageously between 0.940 and 0.965 and the MFI between 0.1 and 5 g/10 min. (190°C/2.16 kg).

The polyethylene (C1) may be chosen from the abovementioned polyethylenes. Advantageously, (C1) is a high-density polyethylene (HDPE) having a density between 0.940 and 0.965. The MFI of (C1) is between 0.1 and 3 g/10 min. (190°C/2.16 kg).

The copolymer (C2) may, for example, be an ethylene/propylene elastomer (EPR) or ethylene/propylene/diene elastomer (EPDM). (C2) may also be a very low-density polyethylene (VLDPE) which is either an ethylene homopolymer or an ethylene/alpha-olefin copolymer. (C2) may also be a copolymer of ethylene with at least one product chosen from (i) unsaturated carboxylic acids, their salts and their esters, (ii) vinyl esters of saturated carboxylic acids and (iii) unsaturated dicarboxylic acids, their salts, their esters, their half-esters and their anhydrides. Advantageously (C2) is an EPR.

Advantageously, 60 to 95 parts of (C1) per 40 to 5 parts of (C2) are used.

The blend of (C1) and (C2) is grafted with an unsaturated carboxylic acid, that is to say (C1) and (C2) are cografted. It would not be outside the scope of the invention to use a functional derivative of this acid. Examples of unsaturated carboxylic acids are those having 2 to 20 carbon atoms, such as acrylic, methacrylic, maleic, fumaric and itaconic acids. The functional derivatives of these acids comprise, for example, anhydrides, ester derivatives, amide derivatives, imide derivatives and metal salts (such as alkali metal salts) of unsaturated carboxylic acids.

Unsaturated dicarboxylic acids having 4 to 10 carbon atoms and their functional derivatives, particularly their anhydrides, are particularly preferred grafting monomers. These grafting monomers comprise, for example, maleic, fumaric, itaconic, citraconic, allylsuccinic, cyclohex-4-ene-1,2-dicarboxylic, 4-methylcyclohex-4-ene-1,2-dicarboxylic, bicyclo [2.2.1] hept-5-ene-2,3-dicarboxylic and x-methylbicyclo [2.2.1] hept-5-ene-2,3-dicarboxylic acids and maleic, itaconic, citraconic, allylsuccinic, cyclohex-4-ene-1,2-dicarboxylic, 4-methylenecyclohex-4-ene-1,2-dicarboxylic, bicyclo [2.2.1] hept-5-ene-2,3-dicarboxylic and x-methylbicyclo [2.2.1] hept-5-ene-2,2-dicarboxylic anhydrides. Advantageously maleic anhydride is used.

Various known processes can be used to graft a grafting monomer onto the blend of (C1) and (C2). For example, this may be achieved by heating the polymers (C1) and (C2) to a high temperature, about 150°C to about 300°C, in the presence or absence of a solvent and with or without a radical initiator.

In the graft-modified blend of (C1) and (C2) obtained in the abovementioned manner, the amount of grafting monomer may be chosen appropriately, but it is preferably from 0.01 to 10% and better still from 600 ppm to 2%, with respect to the weight of grafted (C1) + (C2). The amount of grafted monomer is determined by assaying the succinic functional groups by FTIR spectroscopy. The MFI (190°C/2.16 kg) of the cografted (C1) + (C2) is 5 to 30 and preferably 13 to 20 g/10 min.

Advantageously, the cografted (C1)/(C2) blend is such that the $MFI_{10}/MFI_2$ ratio is greater than 18.5, $MFI_{10}$ denoting the melt flow index at 190°C with a load of 10 kg and $MFI_2$ denoting the melt flow index with a load of 2.16 kg. Advantageously, the $MFI_{20}$ of the blend of the cografted polymers (C1) and (C2) is less than 24. $MFI_{20}$ denotes the melt flow index at 190°C with a load of 21.6 kg.

**With regard to the second embodiment** of the invention, the proportions (by weight) are advantageously the following:

60 to 70% of polyamide,

20 to 30% of polypropylene,
3 to 10% of a polyolefin which results from the reaction of a polyamide (C4) with a copolymer (C3) comprising propylene and an unsaturated monomer X, grafted or copolymerized.

The MFI (230°C/2.16 kg) of the polypropylene is advantageously less than 0.5 g/10 min and preferably between 0.1 and 0.5 g/10 min. Such products are described in EP 647681.

The grafted product of this second embodiment of the invention will now be described. Firstly, (C3) is prepared, this being either a copolymer of propylene and an unsaturated monomer X, or a polypropylene onto which an unsaturated monomer X is grafted. X is any unsaturated monomer that can be copolymerized with propylene or grafted onto the polypropylene and having a functional group capable of reacting with a polyamide. This functional group may, for example, be a carboxylic acid, a dicarboxylic acid anhydride or an epoxide. As examples of monomer X, mention may be made of (meth)acrylic acid, maleic anhydride and unsaturated epoxides such as glycidyl (meth)acrylate. Advantageously, maleic anhydride is used. With regard to the grafted polypropylenes, X may be grafted onto propylene homopolymers or copolymers, such as ethylene/propylene copolymers consisting predominantly (in moles) of propylene. Advantageously, (C3) is such that X is grafted. The grafting is an operation known per se.

(C4) is a polyamide or a polyamide oligomer. Polyamide oligomers are described in EP 342066 and FR 2291225. The polyamides (or oligomers) (C4) are products resulting from the condensation of the abovementioned monomers. Polyamide blends may be used. It is advantageous to use PA-6, PA-11, PA-12, a copolyamide having PA-6 units and PA-12 units (PA-6/12) and a copolyamide based on caprolactam, hexamethylenediamine and adipic acid (PA-6/6,6). The polyamides or oligomers (C4) may have acid, amine or monoamine terminal groups. In order for the polyamide to have a monoamine terminal group, all that is required is to use a chain stopper of formula:

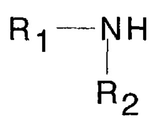 :

in which:

$R_1$ is hydrogen or a linear or branched alkyl group containing up to 20 carbon atoms;
$R_2$ is a linear or branched, alkyl or alkenyl, group having up to 20 carbon atoms, a saturated or unsaturated cycloaliphatic radical, an aromatic radical or a combination of the above. The chain stopper may, for example, be laurylamine or oleylamine.

Advantageously, (C4) is a PA-6, a PA-11 or a PA-12. The proportion by weight of C4 in C3 + C4 is advantageously between 0.1 and 60%. The reaction of (C3) with (C4) preferably takes place in the melt state. For example, it is possible to mix (C3) and (C4) in an extruder at a temperature generally between 230 and 250°C. The average residence time of the melt in the extruder may be between 10 seconds and 3 minutes and preferably between 1 and 2 minutes.

**With regard to the third embodiment**, the proportions (by weight) are advantageously the following:

60 to 70% of polyamide,
5 to 15% of an ethylene/alkyl (meth)acrylate/maleic anhydride copolymer,
the balance being a polyethylene of the LLDPE, VLDPE or metallocene type; advantageously the density of this polyethylene is between 0.870 and 0.925, and the MFI is between 0.1 et 5 g/10 min. (190°C/2.16 kg).

Advantageously, the ethylene/alkyl (meth)acrylate/maleic anhydride copolymers comprise from 0.2 to 10% by weight of maleic anhydride and up to 40% and preferably 5 to 40% by weight of alkyl (meth)acrylate. Their MFIs are between 2 and 100 g/10 min. (190°C/2.16 kg). The term "alkyl (meth)acrylate" advantageously denotes $C_1$ to $C_8$ alkyl acrylates and methacrylates and may be chosen from methyl acrylate, ethyl acrylate, n-butyl acrylate, isobutyl acrylate, 2-ethylhexyl acrylate, cyclohexyl acrylate, methyl methacrylate and ethyl methacrylate.

The melting point is between 80 and 120°C. These copolymers are commercially available. They are produced by radical polymerization at a pressure that may be between 200 and 2500 bar.

By way of example, it is also possible to use the following blends (in % by weight):

1)

- 55 to 70% of PA-6,
- 5 to 15% of an ethylene/propylene copolymer containing predominantly propylene, grafted with maleic anhydride and then condensed with monoaminated caprolactam oligomers,
- the balance to 100% of polypropylene;

2)

- 55 to 70% of PA-6,
- 5 to 15% of at least one copolymer of ethylene with (i) an alkyl (meth)acrylate or a vinyl ester of an unsaturated carboxylic acid and (ii) an unsaturated carboxylic acid anhydride or an unsaturated epoxide, which is grated or copolymerized,

- the balance of polyethylene;

3)

- 55 to 70% of PA-6,
- 5 to 15% of polyethylene or copolymers of ethylene with an alpha-olefin, grafted with maleic anhydride or glycidyl methacrylate,
- the balance of high-density polyethylene.

**With regard to the inner layer, in contact with the petrol and the polyamides comprising at least one product chosen from plasticizers, copolymers having polyamide blocks and polyether blocks and the EPR-type modifiers** The polyamides may be chosen from the polyamides mentioned for the outer layer.

Advantageously, this is PA-11 and PA-12.

As examples of plasticizers, mention may be made of butylbenzenesulphonamide (BBSA), ethylhexyl parahydroxybenzoate (EHPB) and decylhexyl parahydroxybenzoate (DHPB). It would not be outside the scope of the invention to use a mixture of several plasticizers.

The copolymers having polyamide blocks and polyether blocks result from the copolycondensation of polyamide blocks having reactive ends with polyether blocks having reactive ends, such as, *inter alia* :

1)polyamide blocks having diamine chain ends with polyoxyalkylene blocks having dicarboxylic chain ends;
2) polyamide blocks having dicarboxylic chain ends with polyoxyalkylene blocks having diamine chain ends, obtained by cyanoethylation and hydrogenation of aliphatic dihydroxylated alpha, omega-polyoxyalkylene blocks called polyetherdiols;
3) polyamide blocks having dicarboxylic chain ends with polyetherdiols, the products obtained being, in this particular case, polyetheresteramides. Advantageously, these copolymers are used.

Polyamide blocks having dicarboxylic chain ends derive, for example, from the condensation of alpha,omega-aminocarboxylic acids, of lactams or of dicarboxylic acids and diamines in the presence of a chain-stopping dicarboxylic acid.

Polyamide blocks having diamine chain ends derive, for example, from the condensation of alpha, omega-aminocarboxylic acids, of lactams or of dicarboxylic acids and diamines in the presence of a chain-stopping diamine.

The polyether may, for example, be a polyethylene glycol (PEG), a polypropylene glycol (PPG) or a polytetramethylene glycol (PTMG). The latter is also called polytetrahydrofuran (PTHF).

The number-average molar mass $\overline{M}_n$ of the polyamide blocks is between 300 and 15 000 and preferably between 600 and 5000. The mass $\overline{M}_n$ of the polyether blocks is between 100 and 6000 and preferably between 200 and 3000.

Polymers having polyamide blocks and polyether blocks may also include randomly distributed units. These polymers may be prepared by the simultaneous reaction of the polyether and polyamide-block precursors.

For example, it is possible to react polyetherdiol, a lactam (or an alpha,omega-amino acid) and a chain-stopping diacid in the presence of a small amount of water. A polymer is obtained having essentially polyether blocks and polyamide blocks of very variable length, but also the various reactants, having reacted in a random fashion, which are distributed randomly along the polymer chain.

These polymers having polyamide blocks and polyether blocks, whether they derive from the copolycondensation of polyamide and polyether blocks prepared beforehand or from a one-step reaction, have, for example, Shore D hardnesses which may be between 20 and 75 and advantageously between 30 and 70 and an intrinsic viscosity of between 0.8 and 2.5 measured in *meta*-cresol at 25°C for an initial concentration of 0.8 g/100 ml. The MFIs may be between 5 and 50 (235°C, with a load of 1 kg).

The polyetherdiol blocks are either used as such and copolycondensed with polyamide blocks having carboxylic ends or they are aminated in order to be converted into diamine polyethers and condensed with polyamide blocks having carboxylic ends. They may also be mixed with polyamide precursors and a chain stopper in order to make polyamide-block polyether-block polymers having randomly distributed units.

Polymers having polyamide and polyether blocks are described in Patents US 4 331 786, US 4 115 475, US 4 195 015, US 4 839 441, US 4 864 014, US 4 230 838 and US 4 332 920. Mention may be made, for example, of copolymers having PA-6 blocks and PTMG blocks and copolymers having PA-12 blocks and PTMG blocks.

The ratio of the amount of (i) copolymer having polyamide blocks and polyether blocks or plasticizer or EPR-type modifier to (ii) the amount of polyamide is, by weight, advantageously between 5/95 and 60/40 and more preferably between 10/90 and 30/70.
It would not be outside the scope of the invention if (i) is a mixture of 2 or 3 products chosen from plasticizers, copolymers having polyamide blocks and polyether blocks and EPR-type modifiers,

**The inner layer may be also made of polyesters**, they can be chosen among the polyesters described for the outer layer. The polyester of the inner layer can be the same as the polyester of the outer layer.

**The inner layer may also contain** an electrically conductive element in an amount sufficient for the surface resistivity to be less than $10^6$ Ω/□. This is advantageously carbon black. This amount of carbon

black is usually between 5 and 30 parts by weight of black per 100 parts of:

the combination of the polyamide and its plasticizers and other additives,
or the blends of polyamide and polyolefin with polyamide matrix,
or the polyester.

Conventionally, these tubes may include protective sheats, especially made of thermoplastic polymers, thermoplastic elastomers or elastomeric materials, in order to protect them from engine hot spots. Preferantially these protection sheats are made by a coextrusion process.
These tubes may be manufactured by the process and the apparatus described in EP 581208.
These tubes may be manufactured by Uponor Rhorsysteme Gmbh

## Claims

**1.** Multilayer tube comprising, in its radial direction from the outside inwards:

- an outer layer formed from a polyamide or a polyolefin or a polyester,
- a layer formed from a binder,
- a layer of aluminium,
- a layer formed from a binder,
- an inner layer in contact with the petrol, chosen from:

    ➢ blends of polyamide and polyolefin with a polyamide matrix,
    ➢ polyamides comprising at least one product chosen from plasticizers, copolymers having polyamide blocks and polyether blocks and EPR-type modifiers,
    ➢ polyesters,
    the layers being successive and adhering to one another in their respective contact region.

**2.** Tube according to Claim 1, in which the inner layer in contact with the petrol contains an electrically conductive element in an amount sufficient for the surface resistivity to be less than $10^6$ Ω/□.

**3.** Tube according to either of the preceding claims, in which the polyamide of the outer layer is chosen from PA-11 and PA-12.

**4.** Tube according to any one of the preceding claims, in which the binder is chosen from copolyamides and functionalized polyolefins.

**5.** Tube according to any one of the preceding claims, in which, in the polyamide/polyolefin blend of the inner layer, the polyolefin comprises (i) a high-density polyethylene (HDPE) and (ii) a blend of a polyethylene (C1) and a polymer (C2) chosen from elastomers, very low-density polyethylenes and ethylene copolymers, the (C1) + (C2) blend being cografted with an unsaturated carboxylic acid.

**6.** Tube according to any one of Claims 1 to 4, in which, in the polyamide/polyolefin blend of the inner layer, the polyolefin comprises (i) polypropylene and (ii) a polyolefin which results from the reaction of a polyamide (C4) with a copolymer (C3) comprising propylene and an unsaturated monomer X, which is grafted or copolymerized.

**7.** Tube according to any one of Claims 1 to 4, in which, in the polyamide/polyolefin blend of the inner layer, the polyolefin comprises (i) a polyethylene of the LLDPE, VLDPE or metallocene type and (ii) an ethylene/alkyl (meth)acrylate/maleic anhydride copolymer.

**8.** Tube according to any one of claims 1 to 4, in which the polyamide of the inner layer is chosen from PA-11 and PA-12.

**9.** Tube according to claim 8, in which The ratio of the amount of (i) copolymer having polyamide blocks and polyether blocks or plasticizer or EPR-type modifier to (ii) the amount of polyamide is, by weight, between 5/95 and 60/40.

**10.** Tube according to claim 9, in which The ratio of the amount of (i) copolymer having polyamide blocks and polyether blocks or plasticizer or EPR-type modifier to (ii) the amount of polyamide is, by weight, between 10/90 and 30/70.

**11.** Tube according to any of the preceding claims in which the thickness of the Al-layer is between 0.01mm and 1.5mm.

**12.** Tube according to claim 11 in which the thickness of the Al-layer is between 0.02mm and 0.5mm.

**13.** Tube according to claim 12 in which the thickness of the Al-layer is between 50µm and 100µm.

European Patent Office

# EUROPEAN SEARCH REPORT

Application Number
EP 02 29 0163

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br><br>Y | WO 96 18840 A (NOBEL PLASTIQUES ;DOUCHET JEAN CLAUDE (FR); DELTOUR ANDRE (FR)) 20 June 1996 (1996-06-20)<br>* claims 1-5,10-14 *<br>* page 1, line 1 - line 6 *<br>* page 1, line 26 - page 3, line 33 *<br>* page 4, line 33 - page 5, line 6 *<br>* page 5, line 20 - page 7, line 30 *<br>--- | 1,3,4,8, 11-13<br><br><br>1-4,8, 11-13 | B32B1/08<br>B32B15/08<br>B32B27/32<br>B32B27/34<br>B32B27/36<br>B32B15/20<br>F16L11/14 |
| Y | EP 1 036 968 A (ATOFINA)<br>20 September 2000 (2000-09-20)<br>* claims 1,2,8 *<br>* page 3, line 3 - line 23 *<br>* page 9, line 55 - page 10, line 1 *<br>--- | 1-4,8, 11-13 | |
| Y | EP 0 458 365 A (MITSUI PETROCHEMICAL IND)<br>27 November 1991 (1991-11-27)<br>* claim 1 *<br>* page 3, line 55 - line 57 *<br>* page 30, line 11 - line 24 *<br>--- | 1-4,8, 11-13 | TECHNICAL FIELDS SEARCHED (Int.Cl.7) |
| Y | WO 93 06175 A (DU PONT)<br>1 April 1993 (1993-04-01)<br>* claims 1,11 *<br>* page 2, line 27 - page 8, line 14 *<br>* table 1 *<br>----- | 1-4,8, 11-13 | B32B<br>F16L |

The present search report has been drawn up for all claims

| Place of search | Date of completion of the search | Examiner |
|---|---|---|
| THE HAGUE | 25 February 2003 | Girard, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 29 0163

This annex lists the patent family membersrelating to the patent documents cited in the above-mentioned European search report.
The members are as contained in the European Patent Office EDP file on
The European Patent Office is in no way liable for these particulars which are merely given for the purpose of information.

25-02-2003

| Patent document cited in search report | Publication date | Patent family member(s) | Publication date |
|---|---|---|---|
| WO 9618840 A | 20-06-1996 | FR 2728048 A1 | 14-06-1996 |
| | | FR 2731767 A1 | 20-09-1996 |
| | | AU 4308296 A | 03-07-1996 |
| | | WO 9618840 A1 | 20-06-1996 |
| EP 1036968 A | 20-09-2000 | CA 2300635 A1 | 16-09-2000 |
| | | CN 1277336 A | 20-12-2000 |
| | | EP 1036968 A1 | 20-09-2000 |
| | | JP 2000313079 A | 14-11-2000 |
| EP 0458365 A | 27-11-1991 | AT 118232 T | 15-02-1995 |
| | | CA 2043181 A1 | 26-11-1991 |
| | | DE 69107238 D1 | 23-03-1995 |
| | | DE 69107238 T2 | 06-07-1995 |
| | | EP 0458365 A1 | 27-11-1991 |
| | | JP 3173812 B2 | 04-06-2001 |
| | | JP 5009350 A | 19-01-1993 |
| | | KR 9500988 B1 | 06-02-1995 |
| | | US 5304596 A | 19-04-1994 |
| WO 9306175 A | 01-04-1993 | DE 4131908 A1 | 08-04-1993 |
| | | CA 2119858 A1 | 01-04-1993 |
| | | DE 69218228 D1 | 17-04-1997 |
| | | DE 69218228 T2 | 19-06-1997 |
| | | EP 0605657 A1 | 13-07-1994 |
| | | JP 3270472 B2 | 02-04-2002 |
| | | JP 6511030 T | 08-12-1994 |
| | | WO 9306175 A1 | 01-04-1993 |
| | | US 5602200 A | 11-02-1997 |

EPO FORM P0459

For more details about this annex : see Official Journal of the European Patent Office, No. 12/82